(19) Europäisches Patentamt / European Patent Office / Office européen des brevets

(11) **EP 4 638 563 B1**

(12) **EUROPEAN PATENT SPECIFICATION**

(45) Date of publication and mention
of the grant of the patent:
**08.07.2026  Bulletin 2026/28**

(21) Application number: **23840933.8**

(22) Date of filing: **21.12.2023**

(51) International Patent Classification (IPC):
*H01Q 15/00* (2006.01)   *H01Q 1/32* (2006.01)
*C08G 63/183* (2006.01)   *B32B 5/16* (2006.01)
*B32B 1/00* (2024.01)   *B29C 55/14* (2006.01)
*C08L 67/02* (2006.01)   *C08J 5/18* (2006.01)
*B32B 17/10* (2006.01)

(52) Cooperative Patent Classification (CPC):
(C-Sets available)
**C08J 5/18; B29C 55/143; B32B 5/16;
B32B 17/1022; B32B 17/10385; B32B 17/1044;
B32B 17/10761; C08L 67/02; H01Q 1/32;
H01Q 15/0006;** B32B 1/00; B32B 17/10036;
B32B 17/10174; B32B 17/10357; B32B 17/10788;
(Cont.)

(86) International application number:
**PCT/EP2023/087366**

(87) International publication number:
**WO 2024/133747 (27.06.2024 Gazette 2024/26)**

(54) **FILLED POLYESTER FILMS**

GEFÜLLTE POLYESTERFOLIEN

FILMS EN POLYESTER CHARGÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **23.12.2022  GB 202219660**

(43) Date of publication of application:
**29.10.2025  Bulletin 2025/44**

(73) Proprietor: **Mylar Specialty Films U.S. Limited
Partnership
Chester,  VA 23836 (US)**

(72) Inventor: **SCHOSSELER, Lucien
1681 Contern BP (LU)**

(74) Representative: **Carpmaels & Ransford LLP
One Southampton Row
London WC1B 5HA (GB)**

(56) References cited:
**EP-A1- 0 532 172     EP-A1- 0 648 802
EP-A2- 0 261 430     WO-A1-99/33910
CN-A- 110 093 017     US-A- 5 132 356**

(52) Cooperative Patent Classification (CPC): (Cont.)
B32B 2250/02; B32B 2264/102; B32B 2264/1021;
B32B 2264/1022; B32B 2264/1024;
B32B 2264/1025; B32B 2264/104; B32B 2264/12;
B32B 2264/302; B32B 2264/303; B32B 2307/204;
B32B 2307/308; B32B 2307/538; B32B 2307/736;
B32B 2369/00; B32B 2419/00; B32B 2605/08;
C08G 63/183; C08J 2367/02; C08K 2201/005

C-Sets
**C08K 3/36, C08L 67/02;**
**C08K 5/5419, C08L 67/02;**
**C08L 67/02, C08L 83/04, C08K 3/36;**
B32B 17/10005, B32B 2367/00

**Description**

The present invention relates to filled polyester films having low haze and low thickness, and methods of making them. The invention also relates to the use of the films, particularly as functional layers in laminated glazing.

Laminated glazing typically comprises two or more sheets of glass either side of an intermediate layer comprising one or more layers of a bonding resin, for instance polyvinylbutyral (PVB) or ethylene vinyl acetate (EVA), wherein the resin layers conventionally have a thickness of 0.2 to 1 mm. The glass layers are usually an inorganic glass but may also be made from transparent rigid organic polymeric layers such as polycarbonate. The purpose of the bonding resin layer and the laminate structure is to confer additional or improved properties upon the structure, for instance improved strength or shatter-resistance. Such laminate structures are of particular utility in automotive applications, particularly windscreens, and in the construction industry.

It is also known to incorporate one or more functional layers comprising a thermoplastic polymer into laminated glazing in order to impart some additional desirable property to the structure such as light filtration, for instance selective removal of certain wavelengths or reduction of solar heat transmission. Various thermoplastic polymers have been proposed for this purpose, including polyethylene terephthalate (PET). The functional layer may comprise a polymeric substrate and one or more coating or laminated layers capable of imparting the desired functionality, for instance electrical conductivity. Such electrically conductive layers may provide conventional and known functionality such as electrical heating, and so the polymeric substrate should exhibit not only the required optical properties (i.e. optical performance and/or optical activity) but also good dielectric strength and good thermal dimensional stability. Functional layers have typically been embedded between two or more layers of a bonding resin such as PVB or EVA, since such bonding layers typically adhere better to the outer glass layers than does the thermoplastic polymeric functional layer.

In the construction industry, functional laminated glazing is sometimes referred to as "architectural glass", and there is a need for new functionalities for such materials. For instance, the relatively higher radiofrequency of 5G transmission signals (and future 6G and subsequent generations) means that they are attenuated by modern laminated glass. To avoid the installation of a costly internal network, it would be desirable to provide laminated glazing which has improved 5G signal penetration in order to enhance 5G signal propagation inside buildings. In addition, the higher frequency 5G signal is less capable (relative to the 4G signal) of travelling large distances or of penetrating solid objects, requiring the costly installation of a greater number of (typically smaller) base stations with line-of-sight in order to propagate the signal, particularly within urban environments. Another desirable functionality is therefore to provide optically transparent glazing capable of providing passive reflection of the 5G signal to cover dead-zones, without requiring connection to a power supply.

Thus, there is a need for laminated glazing which exhibits new functionalities and which exhibits the optical performance of conventional laminated glazing. A difficulty with the use of functional layers in laminated glazing is the provision of a thermoplastic polymeric film as the substrate which has sufficiently high optical performance, including high transparency, low haze and low optical defects, while retaining ease of manufacture and good handling properties (in particular windability without sticking or blocking). Optical defects can be particularly problematic in films having very smooth surfaces, which are more susceptible to winding-induced defects. There is a particular need for laminated glazing having novel or improved electroactive characteristics which may be provided by an electroactive functional layer, and hence the polymeric substrate should also exhibit high dielectric strength.

It is an object of the invention to provide functional films and polymeric substrates therefor which are suitable for use in laminated glazing, in order to address one or more of the afore-mentioned problems. It is a particular object of this invention to provide functional films and polymeric substrates therefor which are suitable for use in functional laminated glazing, wherein the films and substrates exhibit high transparency, low haze, low optical defects and high dielectric strength, particularly wherein said functional films are electroactive, and preferably also high thermal dimensional stability.

EP 0 648 802 A1 relates to *"films or sheets of linear polyester having incorporated therein a combination of precipitated silica particles and calcined clay having certain particle sizes and present in specific amounts based upon the weight of the polyester film"*.

EP 0 261 430 A2 relates to *"a biaxially oriented polyester film formed from an intimate mixture comprising (1) an aromatic polyester, and (2) 0.01 to 4 % by weight, based on the aromatic polyester, of spherical fine particles of silica having (a) an average particle diameter of 0.05 to 4 μm, (b) a particle diameter ratio, defined by the ratio of maximum diameter to minimum diameter, of from 1.0 to 1.2, and (c) a relative standard deviation ( sigma ) of particle size, of up to 0.5"*.

US 5 132 356 A relates to *"films or sheets of linear polyester containing glass spheres having a certain particle size distribution and in a certain amount based upon the weight of the polyester film"*.

WO 99/33910 A1 relates to *"a low haze, speckle free polyester film suitable for use in solar windows"*, comprising *"a mixture of calcined silicone particles and fumed silica agglomerates in which essentially all of the calcined silicone particles have a particle size below about 7 microns; and essentially all the fumed silica agglomerates have a discrete agglomerate size below 1 micron"*.

CN 110 093 017 A relates to *"BOPET film high concentration matt masterbatch and a preparation method*

*thereof'.*

EP 0 532 172 A1 relates to *"a biaxially oriented, unidirectionally long polyethylene-2,6-naphthalate film, (A) which contains (a) 0.05 to 04 % by weight of first inert solid particles having an average particle diameter of 0.05 to 0.3 $\mu m$, and (b) 0.005 to 0.05 % by weight of second inert solid particles having an average particle diameter of 0.3 to 1.0 $\mu m$, this average particle diameter being greater than the average particle diameter of the first inert solid particles by at least 0.2 $\mu m$, wherein: (B) the Young's modulus in the length direction is at least 650 kg/mm$^2$, the Young's modulus in the width direction is at least 600 kg/mm$^2$, the Young's modulus in the length direction is greater than the Young's modulus in the width direction, (C) the heat shrinkage factor in the length direction in heat treatment at 70 °C for 1 hour under no load is not more than 0.08 %, and (D) the surface roughness, Ra, is 3 to 10 nm; and a magnetic tape obtained therefrom".*

According to a **first aspect** of the present invention, there is provided a biaxially oriented polyester film comprising first inorganic particles P1 and second inorganic particles P2, wherein:

(i) said film has a total thickness of from 1.5 to 8.0 $\mu m$;
(ii) said first inorganic particles P1 have an average particle size of from 0.10 to 0.50 $\mu m$;
(iii) said first inorganic particles P1 are present in the film in a concentration of from 100 to 3000 ppm;
(iv) said second inorganic particles P2 have an average particle size of from 1.50 to 3.50 $\mu m$;
(v) said second inorganic particles P2 are present in the film in a concentration of from 100 to 2000 ppm; and
(vi) said film exhibits a haze of no more than 5.0%, measured by the method given in the description,

wherein said first inorganic particles P1 are amorphous silica particles, and wherein said second inorganic particles P2 are selected from spherical methyl silsesquioxane particles;
wherein the term "average particle size" refers to the volume distributed median particle diameter, which is the equivalent spherical diameter corresponding to 50% of the volume of all the particles, read on the cumulative distribution curve relating volume % to the diameter of the particles, as measured by laser light diffraction.

The film of the present invention exhibits a surprisingly advantageous combination of low haze, high transparency, low optical defects, ease of manufacture, good handling properties and high dielectric strength.

The polyester film described herein is a self-supporting film or sheet, by which is meant a film or sheet capable of independent existence in the absence of a supporting base.

The polyester(s) which constitute the film are preferably crystallisable polyesters. The polyesters are suitably synthetic linear polyesters. Such polyesters are obtainable by condensing one or more dicarboxylic acid(s) or their lower alkyl (up to 6 carbon atoms) diesters with one or more diols. The dicarboxylic acid component contains at least one aromatic dicarboxylic acid, which is preferably terephthalic acid, isophthalic acid, phthalic acid, 1,4-, 2,5-, 2,6- or 2,7-naphthalenedicarboxylic acid, and is preferably terephthalic acid (TA) or 2,6-naphthalenedicarboxylic acid, and preferably terephthalic acid. The polyester may also contain one or more residues derived from other dicarboxylic acids such as 4,4'-diphenyldicarboxylic acid, hexahydro-terephthalic acid, 1,10-decanedicarboxylic acid, aliphatic dicarboxylic acids including those of the general formula $C_nH_{2n}(COOH)_2$ wherein n is 2 to 8 (such as succinic acid, glutaric acid, sebacic acid, adipic acid, azelaic acid, suberic acid or pimelic acid, preferably sebacic acid, adipic acid and azelaic acid, and more preferably azelaic acid). The diols are preferably selected from aliphatic and cycloaliphatic glycols, e.g. ethylene glycol (EG), 1,3-propanediol, 1,4-butanediol and 1,4-cyclohexanedimethanol (CHDM), and preferably from ethylene glycol (EG). Preferably the polyester contains only one dicarboxylic acid, preferably said aromatic dicarboxylic acid, and preferably terephthalic acid. Preferably the polyester contains only one glycol, preferably an aliphatic glycol, preferably ethylene glycol. Preferably the polyester contains one aromatic dicarboxylic acid and one aliphatic glycol. Polyethylene terephthalate (PET) or polyethylene 2,6-naphthalate (PEN), particularly PET, is the preferred polyester. The polyester may optionally contain relatively minor amounts of one or more residues derived from the other dicarboxylic acids and/or diols described above, and where such minor amounts are present then the total amount of said other dicarboxylic acid(s) is preferably less than 10 mol%, preferably less than 5 mol%, preferably less than 1 mol% of the total dicarboxylic acid fraction of the polyester of a given layer and/or the total amount of said other diol(s) is preferably less than 15 mol%, preferably less than 10 mol%, preferably less than 5 mol% of the total diol fraction of the polyester of a given layer.

The polyester is the major component of the film and makes up at least 50% by weight of the total weight of the layer, preferably at least 65%, preferably at least 80%, more preferably at least 85% by weight of the total weight of the film, and typically at least 95% by weight of the total weight of the film.

The intrinsic viscosity of the polyester film is typically in the range of from 0.5 to 0. 8, preferably from 0.55 to 0.7, and more preferably from 0.55 to 0.65.

Formation of the polyester is conveniently effected in a known manner by condensation or ester interchange, generally at temperatures up to 295 °C. In a preferred embodiment, solid state polymerisation may be used to increase the intrinsic viscosity of crystallisable polyesters to the desired value, using conventional techniques well-known in the art, for instance using a fluidised bed such as a nitrogen fluidised bed or a vacuum fluidised bed using a rotary vacuum drier.

Formation of the film may be effected by conventional melt-extrusion techniques well-known in the art. In general terms, the process comprises the steps of extruding a layer of polymer at a temperature within a range appropriate to the melting temperature thereof, for instance in a range of from 250 to 300°C (or, typically, no more than 10°C higher than the crystalline melting point of the polymer), quenching the extrudate and orienting the quenched extrudate.

Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. Biaxial orientation may be effected by simultaneous orientation or by sequential orientation. Preferably simultaneous orientation is effected.

Simultaneous biaxial orientation may be effected, for instance, in a tubular process by extruding a thermoplastics polyester tube which is subsequently quenched, reheated and then expanded by internal gas pressure to induce transverse orientation, and withdrawn at a rate which will induce longitudinal orientation. Particularly suitable simultaneous biaxial orientation processes are disclosed in EP-2108673-A and US-2009/0117362-A1.

Another preferred technique is a flat film process in which the film-forming polyester is extruded through a slot die and rapidly quenched upon a chilled casting drum to ensure that the polyester is quenched to the amorphous state. Orientation is then effected by stretching the quenched extrudate in two mutually perpendicular directions at a temperature above the glass transition temperature(s) of the polyester. Sequential orientation may be effected by stretching a flat, quenched extrudate firstly in one direction, usually the longitudinal (or machine) direction (MD), i.e. the forward direction through the film stretching machine, and then in the transverse direction (TD). Forward stretching of the extrudate is conveniently effected over a set of rotating rolls or between two pairs of nip rolls, transverse stretching then being effected in a stenter apparatus.

Stretching is generally effected so that the dimension of the oriented film is from 2.0 to 5.0, preferably no more 4.0, preferably no more than 3.7, preferably in the range of from 2.0 to 4.0, more preferably 2.5 to 4.0, more preferably 3.0 to 4.0, more preferably 3.3 to 3.7 times its original dimension in each direction of stretching. Stretching is effected at temperatures higher than the $T_g$ of the polyester composition, preferably at least 5°C higher, preferably at least 15°C higher than the $T_g$, and preferably in the range of from $T_g+5°C$ to $T_g+30°C$. Typically, stretching is effected at temperatures in the range of 5 to 155°C, preferably 5 to 110°C. If balanced film properties are desired, then the film is suitably stretched equally in the machine and transverse directions.

Preferably, a simultaneous biaxial stretching process is used, which is particularly advantageous for making the thin films of the present invention.

A stretched film may be, and preferably is, dimensionally stabilised by heat-setting under dimensional support at a temperature above the glass transition temperature(s) of the polyester but below the melting temperature ($T_M$) thereof, to induce the desired crystallinity of the polyester. During the heat-setting, a small amount of dimensional relaxation may be performed in the transverse direction (TD) and/or machine direction (MD). The dimensional relaxation is preferably no more than 5.0%, and preferably 1.0 to 3.0%. Dimensional relaxation may be effected by techniques conventional in the art. In a sequential orientation process, dimensional relaxation in the MD is relatively more complex than in the TD, since reduced line tensions or speeds are required. For this reason, where MD relaxation is desired, a simultaneous orientation process is preferably used and in this embodiment simultaneous relaxation in the MD and TD is typically effected. The actual heat-set temperature and time will vary depending on the composition of the film and its desired final thermal shrinkage but should not be selected so as to substantially degrade the toughness properties of the film such as tear resistance. Within these constraints, heat-set temperatures are typically from 80°C less than the melting temperature of the film (i.e. $T_M-80°C$) to 10°C less than $T_M$ (i.e. $T_M-10°C$), more typically from $T_M-70°C$ to $T_M-20°C$, and preferably in the range of from 150 to 245°C, more preferably no more than 225°C, most preferably no more than 200°C. Preferably, the heat-set temperature is in the range of 180 to 225°C, more preferably 180 to 200°C. After heat-setting the film is typically quenched rapidly in order induce the desired crystallinity of the polyester.

Advantageously, the film may be and preferably is manufactured in air, i.e. wherein the film is not manufactured (including the steps of extrusion, casting and stretching) under the atmosphere of an inert gas (such as nitrogen or a noble gas such as argon). Thus, the polyester compositions and films described herein are thermally stable, and do not require any special handling conditions, in particular an inert atmosphere, during manufacture or storage.

The final thickness of the polyester film is in the range of from 1.5 to 8.0 $\mu$m, preferably from 2.0 to 8.0 $\mu$m, preferably from 2.5 to 8.0 $\mu$m, preferably from 2.5 to 6.0 $\mu$m, preferably from 2.5 to 5.0 $\mu$m, preferably from 3.0 to 5.0 $\mu$m, preferably from 3.0 to 4.0 $\mu$m.

The concentration and size of the inorganic particles in the film is an important factor in providing the desirable properties of the film. The concentration and size of particles in the film, along with the film thickness, may be modulated to achieve the desired combination of optical properties and handling characteristics of the film. The concentration and size of the first inorganic particles P1 are particularly important to achieve the desired optical properties, while the concentration and size of the second inorganic particles P2 are particularly important to achieve the desired handling characteristics.

Said first inorganic particles P1 are present in the film in a concentration of from 100 to 3000 ppm, preferably from 100 to 1500 ppm, preferably from 500 to 1000 ppm, by weight of the film. Said second inorganic particles P2 are present in the film in a concentration of from 100 to 2000 ppm, preferably from 200 to 600 ppm, preferably from 400 to 600 ppm, by weight of the film.

Said first inorganic particles P1 have an average particle size in the range of from 0.10 to 0.50 $\mu$m, preferably from 0.25 to 0.35 $\mu$m.

Said second inorganic particles P2 have an average particle size in the range of from 1.50 to 3.50 $\mu$m, preferably from 1.8 to 3.1, preferably 1.8 to 2.3 $\mu$m.

The second inorganic particles P2 preferably have an average particle size which is less than the film thickness.

As used herein, the term "average particle size" refers to the volume distributed median particle diameter (equivalent spherical diameter corresponding to 50% of the volume of all the particles, read on the cumulative distribution curve relating volume % to the diameter of the particles - often referred to as the "Dv50" or "D50" value).

The polyester film described herein exhibits a haze of no more than 5.0%, preferably no more than 3.0%, preferably no more than 2.5%.

Preferably the polyester film exhibits a total light transmittance (TLT) in the wavelength range of 300-800nm of at least 85.0%, preferably at least 88.0%, preferably at least 89.0%.

The polyester film described herein preferably has a surface which is sufficiently smooth to allow the subsequent deposition of an electrically conductive layer or pattern to ensure the integrity and/or uniformity thereof (i.e. without breaks or pin-pricks or other discontinuities therein). However, the film surface preferably also exhibits a degree of surface roughness to allow for ease of manufacture and handling, while at the same time providing a low haze.

Preferably, the film described herein exhibits a surface roughness (Ra) of no more than 150 nm, preferably no more than 120 nm, preferably no more than 110 nm, preferably no more than 100 nm, preferably in the range of from 20 nm to 100 nm, preferably 20 nm to 50nm.

The polyester film preferably exhibits a surface roughness (Rt) of no more than 1800 nm, preferably no more than 1500 nm, preferably no more than 1250 nm, typically at least 250nm and more typically at least 500nm, and preferably in the range of from 500 nm to 1250 nm.

The polyester film preferably exhibits a surface roughness (Rz) of no more than 400 nm, preferably no more than 350 nm, preferably no more than 300 nm, preferably at least 100nm and more typically at least 150 nm, more typically at least 200nm, and preferably in the range of from 100 to 400 nm.

The dielectric properties of the polyester film are important when it is used as a substrate for an electrically conductive layer as described herein. Preferably, the film exhibits a thickness-normalised breakdown voltage of at least 350, preferably 350-500 and typically in the range of 300-450 V/$\mu$m. Preferably, the breakdown voltage of the film is in the range of 1000-2000 V, preferably 1200-2000 V.

The polyester film described herein preferably film exhibits an optical defect count per m$^2$ of no more than 20, preferably no more than 15, preferably no more than 10, in respect of defects less than 500$\mu$m in size, and preferably also zero optical defects/m$^2$ in respect of defects at least 2.0mm in size.

The polyester film preferably exhibits isotropic shrinkage, preferably wherein the ratio of MD/TD shrinkage is in the range of 1.1 to 1.7, preferably 1.2 to 1.5, preferably wherein the shrinkage in the machine direction of the film is no more than 4.0% (preferably in the range of from 2.0 to 4.0%) and the shrinkage in the transverse direction of the film is no more than 3.0% (preferably in the range of from 1.0 to 3.0%), wherein shrinkage is measured in air at 150°C for 30 minutes. Such isotropic shrinkage may be achieved by asymmetric stretch ratios and/or by asymmetric dimensional relaxation in the machine and transverse directions, but is preferably achieved by asymmetric dimensional relaxation preferably wherein the film is stretched symmetrically. Isotopic shrinkage is particularly advantageous for the manufacture of curved laminated glazing, such as windscreens, which glazing may be curved in a first direction and substantially linear in a second orthogonal direction, or curved to different radii of curvature in orthogonal directions. The manufacture of curved glazing panels is generally known in the art, and may be achieved for instance by the methods disclosed in US-2007/0029026-A.

In an alternative embodiment, the polyester film exhibits balanced shrinkage, in which the MD and TD shrinkage values are substantially the same (i.e. the MD and TD shrinkage values are within less than 5% of each other), preferably wherein the shrinkage in each direction is no more than 4.0%, preferably no more than 3.0%, and preferably 1.0 to 4.0%, preferably 1.0 to 3.0%, wherein shrinkage is measured in air at 150°C for 30 minutes.

As described hereinabove, the polyester film may be used as a substrate for an electrically conductive layer suitable for providing an electrical heating functionality to laminated glazing, particularly in the automotive industry and as is well-known in the art, and in this case the electrically conductive layer typically takes the form a pattern of electrically conductive wires. A polyester film having the afore-mentioned thermal dimensional stability characteristics is of particular utility in such applications.

The ingredients of the polyester film may be introduced into the polyester composition in a conventional manner. For example, the additive(s) may be introduced by mixing with the monomeric reactants from which the film-forming polyester composition is derived, or the additive(s) may be mixed with the polyester composition by tumble or dry blending or by compounding in an extruder, followed by cooling and, usually, comminution into granules or chips. Masterbatching technology may also be employed.

The polyester film described herein preferably has disposed on a surface thereof an electrically conductive layer. Preferably, the electrically conductive layer is disposed on the first surface of the film. For the primary end-uses described herein, the electrically conductive layer is a transparent electrically conductive layer, which are well-known in the art. Suitable transparent electrically conductive layers may be made from any electrically conductive substance, particularly metals (e.g. gold and silver), metal alloys and metal oxides (particularly doped or mixed metal oxides) and metal nitrides (e.g. titanium nitride). Suitable materials include doped or mixed zinc oxides (e.g. fluorine-doped zinc oxide (FTO), or tin-, indium-, boron, gallium- or aluminium-doped zinc oxide (e.g. AZO)), doped or mixed tin oxides (e.g. fluorine-doped tin oxide, or indium tin oxide (ITO)) and cadmium oxides (e.g. cadmium stannate). ITO is particularly preferred. The electrically conductive layer is constituted by an electrically conductive material, which may comprise electrically conductive particles in a binder. The electrically conductive material may be an electrically conductive ink.

The electrically conductive layer may comprise a pattern of electrically conductive material or an electrically conductive mesh. Such patterns and mesh are on the nano-scale and offer various functionalities. For instance, improved 5G transmission in architectural glass may be achieved by a transparent and electrically conductive nano-scale metal mesh. Improved 5G reflectivity may be achieved by a nano-scale patterned transparent electrically conductive layer.

The electrically conductive material may be disposed by any suitable technique, such as printing, sputtering, vacuum deposition or the like, particularly by sputtering. Any suitable printing technique may be used to apply an electrically conductive ink to the polyester film substrate, which may include off-set, gravure, silk screen, flexographic printing, thermal transfer printing (TTP) or laser transfer printing (LTP). Other suitable techniques include chemical vapour deposition (CVD), plasma CVD, inductively coupled plasma CVD, capacitively coupled CVD, atomic layer deposition (ALD), or reactive thermal or electron beam evaporation.

Preferred methods of applying an electrically conductive layer (particularly a silver, zinc boride or ITO layer, and particularly an ITO layer) are performed at a temperature below 150°C, preferably below 120°C, preferably at no more than 100°C and more preferably at no more than 70°C, and preferably without an additional step of heating the substrate prior to deposition of the electrically conductive material (i.e. wherein the method is performed at room temperature (20°C)), and more typically at a temperature of at least 40°C, as is known in the art. Such methods reduce the demands on the polyester film in terms of its dimensional stability requirements and which therefore allows the film to manufactured at lower heat-setting temperatures (preferably no more than 200°C), which in turn advantageously reduces the haze component in the film related to increased crystallization, thereby allowing the manufacture of thinner films with enhanced optical clarity.

A particularly preferred method of preparing an electrically conductive layer (particularly ITO) comprises sputtering the electrically conductive material, particularly at a temperature below 150°C, preferably below 120°C, preferably no more than 100°C.

The thickness of said electrically conductive layer is preferably in the range of from 1 nm to 1000 nm, preferably at least 3 nm, preferably at least 5 nm, preferably at least 10 nm, preferably at least 25 nm, and preferably no more than 300 nm, preferably no more than 150 nm, preferably no more than 100 nm, preferably no more than 50 nm and preferably from 3 nm to 300 nm, preferably from 10 nm to 150 nm, preferably from 25 to 50 nm.

As used herein, the term "transparent" in the context of the electrically conductive layer means transparent to visible light (suitably as measured herein in the range of 300-800nm), such that the assembly of the polyester film described herein and said electrically conductive layer also satisfies the afore-mentioned thresholds for total light transmittance and haze specified for the polyester film itself.

The polyester film described hereinabove optionally has disposed thereon one or more optically active layers, particularly layers which at least partially filter or reflect selected wavelengths of radiant solar energy in one or more of the visible, UV or other wavelength regions, including tinted or coloured layers to impart colour and/or UV-absorbent or reflective layers. Such layers are known in the art and comprise materials which absorb or reflect wavelengths in the desired region of the electromagnetic spectrum.

Advantageously, the polyester film described herein is useful as a functional layer in laminated glazing, particular wherein said functional layer is an electroactive layer.

According to a **second aspect** of the invention, there is provided a method of making a film as described herein, said method comprising the steps of:

> (i) extruding a layer of molten polyester;
> (ii) biaxially stretching said layer of molten polyester in two mutually perpendicular directions, preferably by simultaneous biaxial stretching;
> (iii) heat-setting the film under tension preferably at a temperature in the range of no more than 225°C, preferably no more than 200°C, preferably in the range of 180 to 225°C, more preferably 180 to 200°C;
> (iv) dimensionally relaxing the film by 1.0 to 3.0% in the machine dimension of the film at a temperature in the range of 180 to 200°C and/or dimensionally relaxing the film by 1.0 to 3.0% in the transverse dimension of the film at a temperature in the range of 180 to 200°C, and preferably conducting said dimensional relaxation in both directions;

and

(i) optionally disposing an electrically conductive layer on a surface of the film, preferably by sputtering.

According to a **third aspect** of the invention, there is provided a multilayer assembly comprising a polyester film preferably having disposed on a surface thereof an electrically conductive layer, as described hereinabove in respect of the first aspect of the invention, and one or more glass layers, preferably wherein said polyester film is sandwiched between two glass layers.

In the third aspect, said polyester film may be disposed directly on a surface of a glass layer. Preferably however, the assembly further comprises a bonding resin layer between the polyester film and a glass layer.

In a preferred embodiment of the third aspect (hereinafter referred to as **Embodiment 3A),** the multilayer assembly comprises said polyester film (preferably having disposed on a surface thereof an electrically conductive layer), and further comprises first and second glass layers and first and second bonding resin layers, such that the layer order is: first glass layer / first bonding resin layer / polyester film / second bonding resin layer / second glass layer. In this embodiment, the multilayer assembly is preferably curved in at least a portion thereof, such that the assembly may be curved in a first direction and substantially linear in a second orthogonal direction, or may be curved to different degrees of curvature in orthogonal directions. Such curved laminated glazing panels are particularly suitable as windscreens or rear windows in automotive applications. Such assemblies in which the electrically conductive layer is present are particularly suitable as laminated glazing panels having an electrical heating functionality, particularly in the automotive industry, as described hereinabove. A polyester film having the afore-mentioned thermal dimensional stability characteristics, particularly said isotopic shrinkage characteristics, is of particular utility in such applications.

Preferably, said bonding resin layer is selected from PVB or EVA, preferably PVB.

In a further preferred embodiment of the third aspect (hereinafter referred to as **Embodiment 3B),** the multilayer assembly comprises an electrically conductive layer constituted by a pattern of electrically conductive material or an electrically conductive mesh, particularly one which functionally interacts with radio-frequency wavelengths in the range suitable for 5G (or subsequent generation) mobile communication technology. Thus, the electrically conductive layer is preferably suitable for functionally interacting with radio-frequency wavelengths in the range of 600 MHz to 70 GHz, and preferably selected from one or more of the ranges of 600-900MHz (the so-called "low band"), 1.7-4.7GHz (particularly 3.3-4.2GHz) (the so-called "mid-band") and 24-54 GHz (particularly 24-47 GHz and typically 24-30 GHz) (the so-called "high-band"), and particularly in said mid-band and high-band ranges. This embodiment of the present invention is particularly useful in the propagation of mobile communication (particularly 5G) transmission signals in the high-band range, particularly in metropolitan or urban areas. This embodiment of the present invention is also applicable to subsequent generations of mobile communication signal, such as 6G (95GHz to 3 THz). Such patterns and mesh are on the nano-scale (i.e. less than 1000nm, typically no more than 100nm). Such multilayer assemblies are of particular utility as architectural glass in building construction, particularly in metropolitan or urban areas. As noted hereinabove, improved 5G transmission in architectural glass may be achieved by a transparent and electrically conductive nano-scale metal mesh. Improved 5G reflectivity may be achieved by a nano-scale patterned transparent electrically conductive layer.

Of particular utility in the third aspect is the inclusion of one or more the optically active layers referred to hereinabove, particularly layers which at least partially filter or reflect selected wavelengths of radiant solar energy in one or more of the visible, UV or other wavelength regions, including tinted or coloured layers to impart colour and/or UV-absorbent or reflective layers. An optically active layer is preferably disposed between the polyester film and a glass layer, and where a bonding resin layer is present then said optically active layer(s) is/are disposed between the polyester film and a bonding resin layer. Thus, in Embodiment 3A, said optically active layers are preferably disposed, along with the polyester film, between the first and second bonding resin layers.

The glass in said glass layers are typically an inorganic glass but may also be made from transparent rigid organic polymeric layers such as polycarbonate. Preferably the glass is inorganic glass (i.e. silicate or silica-based glass).

The multilayer assembly of the third aspect of the invention is preferably a glazing panel, preferably a window, preferably a window in an automotive vehicle (preferably a windscreen or rear window) or an architectural window in a building.

In a **fourth aspect** of the invention, there is provided an electrically heatable laminated glazing panel comprising the multilayer assembly of the third aspect which comprises said polyester film having disposed on a surface thereof an electrically conductive layer, and wherein said multilayer assembly further comprises first and second glass layers and first and second bonding resin layers, such that the layer order is: first glass layer / first bonding resin layer / polyester film / second bonding resin layer / second glass layer. In a preferred embodiment of the fourth aspect, said glazing panel is curved and said polyester film exhibits isotropic shrinkage, preferably such that the ratio of MD/TD shrinkage is in the range of 1.1 to 1.7, and wherein the polyester film exhibits shrinkage in the machine direction of the film of no more than 4.0% and the shrinkage in the transverse direction of the film is no more than 3.0%, wherein said shrinkage is as defined hereinabove.

In a **fifth aspect** of the invention, there is provided the use of said multilayer assembly of the third aspect which comprises said polyester film having disposed on a surface thereof an electrically conductive layer, and which further comprises first and second glass layers and first and second bonding resin layers, as electrically heatable laminated glazing, particularly in automotive applications. In a preferred embodiment of the fifth aspect, said multilayer assembly is curved and said polyester film exhibits isotropic shrinkage, preferably such that the ratio of MD/TD shrinkage is in the range of 1.1 to 1.7, and wherein the shrinkage in the machine direction of the film is no more than 4.0% and the shrinkage in the transverse direction of the film is no more than 3.0%, wherein said shrinkage is as defined hereinabove.

In a **sixth aspect** of the invention, there is provided a laminated glazing panel comprising the multilayer assembly of the third aspect (particularly Embodiment 3B) wherein said polyester film has disposed thereon said electrically conductive layer and optionally said one or more optically active layers, wherein said electrically conductive layer is constituted by a pattern of electrically conductive material or an electrically conductive mesh suitable for functionally interacting with radio-frequency wavelengths of mobile communication technology, preferably those selected from one or more of the ranges of 600-900MHz, 1.7-4.7GHz and 24-54 GHz.

In a **seventh aspect** of the invention, there is provided the use of a multilayer assembly of the third aspect (particularly Embodiment 3B) as a laminated glazing panel in building construction wherein said polyester film has disposed thereon said electrically conductive layer and optionally said one or more optically active layers, wherein said electrically conductive layer is constituted by a pattern of electrically conductive material or an electrically conductive mesh suitable for functionally interacting with radio-frequency wavelengths of mobile communication technology, preferably those selected from one or more of the ranges of 600-900MHz, 1.7-4.7GHz and 24-54 GHz.

It will be appreciated that the preferences and description of the polyester film as described hereinabove for the first aspect of the invention applies equally for the each of the second and subsequent aspects.

***Property Measurement***

The following analyses are used to characterize the films described herein:

(i) Optical clarity of the film is evaluated by measuring total luminance transmission (TLT) and haze (% of scattered transmitted visible light) through the total thickness of the film using a BYK Gardner haze-gard dual according to the standard test method ASTM D1003. The TLT values and ranges are reported herein over the wavelength range of 300-800nm unless otherwise specified.

(ii) Intrinsic viscosity (in units of dL/g) of the polyester and polyester film is measured by solution viscometry in accordance with ASTM D5225-98(2003) on a Viscotek™ Y-501C Relative Viscometer (see, for instance, Hitchcock, Hammons & Yau in American Laboratory (August 1994) "The dual-capillary method for modern-day viscometry") by using a 0.5% by weight solution of polyester in o-chlorophenol at 25°C and using the Billmeyer single-point method to calculate intrinsic viscosity:

$$\eta = 0.25\eta_{red} + 0.75(\ln \eta_{rel})/c$$

wherein:

$\eta$ = the intrinsic viscosity (in dL/g),

$\eta_{rel}$ = the relative viscosity,

c = the concentration (in g/dL), &

$\eta_{red}$ = reduced viscosity (in dL/g), which is equivalent to $(\eta_{rel}-1)/c$ (also expressed as $\eta_{sp}/c$ where $\eta_{sp}$ is the specific viscosity).

(iii) Thermal shrinkage at a specific predetermined temperature is assessed for film samples of dimensions 254mm x 254 mm which were cut in specific directions relative to the machine and transverse directions of the film and marked for visual measurement. After heating the specimen to the predetermined temperature (by placing in a heated oven at that temperature) and holding for the predetermined time interval, it was cooled to room temperature and its dimensions re-measured manually. The thermal shrinkage was calculated and expressed as a percentage of the original length.

(iv) Film thickness is measured according to standard test method ISO 4593:1993 using a Hildebrand Thickness Gauge Series HTG-B. The mean average of 9 measurements is taken.

(v) Average particle size is measured by laser light diffraction (preferably Fraunhofer diffraction). The particle sizes referred to herein are measured using a Mastersizer (e.g. a 3000) available from Malvern. The median particle size is determined by plotting a cumulative distribution curve representing the percentage of particle volume below chosen particle sizes and measuring the 50th percentile.

(vi) The surface roughness is measured by a mechanical contact method according to ISO 21920-3:2021 using a Form Talysurf® i60 inductive system (Taylor-Hobson Precision) having a 450mm motorized column, 60mm horizontal traverse unit and 1mm vertical range, and operating Ultra 6.1.12.1 software. The following surface roughness parameters are calculated:

Ra is defined as the arithmetical mean average peak height of the measured surface; the peak height is the absolute value of the profile deviation of the surface from the centre line mean value.

Rt is defined as the total height of the roughness profile, and is the difference between the height of the highest peak and the depth of the deepest valley of the measured surface.

Rz is defined as the mean roughness depth of five Rzi values from five sampling lengths of the surface, wherein each Rzi (greatest height of the roughness profile) is the sum of the height of the highest peak and the depth of the deepest valley, relative to the mean line, within a sampling length.

Thus, as is conventional in the art, surface roughness parameters are calculated relative to the centre line mean value of the surface. The centre line mean value is also referred to as "mean line", which is the average level of the sample surface. It will be appreciated that a polymeric film surface may not be perfectly flat and may have gentle undulations across its surface. The mean line is a straight line that runs centrally through undulations and surface height departures, dividing the profile such that there are equal areas above and below the mean line.

(vii) Thickness-normalised breakdown voltage (in units of V/$\mu$m) is defined herein as the breakdown voltage (V) per micron of film thickness. The breakdown voltage (V) is measured by disposing the polyester film (a 25cm$^2$ sample) between a pair of aluminium foil electrodes and increasing the voltage (typically from 0 to 3000V) until film breakdown is observed. Film breakdown voltage is defined as the voltage when a current of 10 micro Amps is detected through the film thickness. The breakdown voltage is reported as the mean average of 10 measurements.

(viii) The optical defect count is a measurement of the optical quality of the film and is measured by the number of defects per m$^2$ on the surface or in the bulk material that are visible with the eye. It is measured using a Dr. Schenk Web Inspection System WFF-1320 composed of 6 cameras (camera type: DC-13, 4k; 24V power supply; air-cooled) and 6 beamed-line illumination units CL40 (LED-type Luxeon Star LXHL-LD3C: wavelength of 627nm; light power of 690mW; beam divergence of 130°) per 2400mm film width installed above the film to be inspected within a film rewinding apparatus. The distance between each camera is 400mm, providing a visual inspection range of 420.5mm (on the film surface) with an overlap between adjacent cameras of 20.5mm and a total inspection range of 2420.5mm. The inclination of illumination and cameras to the film surface was 90°. Each illumination unit enlights the scanning range of one camera unit. The web material is inspected in transmission. Each camera objective had a focal length of 105mm. Pixel size was 10x10 $\mu$m with a pixel count of 4096, providing a line length of 40.96 mm, and an optical resolution of 103 $\mu$m/pixel. The pixel clock was 50 MHz and the scan rate was 11.95 kHz. In this work, measurements were made along the film length during a rewinding operation of the film, at a web speed of 10m/min. The defects are preferably categorised into sizes, typically 110-220 $\mu$m, 220-500 $\mu$m and >500 $\mu$m, and ≥2.0mm, wherein the term "size" refers to the longest dimension of the defect, and the defect count reported as the number of each category size detected per m$^2$. An optical defect is defined as an irregularity in the film which causes a variation in the amount of light transmitted through the film relative to the neighbouring region(s) of the film. This is manifested as a variation in the brightness of the transmitted optical signal, which is typically referred to as a dark or bright event, relative to the baseline (defined as the mean value of brightness across the film web). The optical defects in polyester films are typically classified as streaks, gels, catalyst residues and additive agglomerations.

The invention is further illustrated by reference to the following examples and the accompanying figures. The examples are not intended to limit the scope of the invention as described above.

## EXAMPLES

Examples G1 to G10

PET compositions were made using conventional techniques and comprising various different amounts and identities of inorganic particles. Two initial series of films were prepared by extruding these compositions on a laboratory-scale film stretching apparatus to yield an amorphous cast extrudate having a thickness of either 75 or 110 $\mu$m (i.e. a first "thin" series and a second "thick" series). The cast extrudate was stretched simultaneously in the MD and TD at stretch ratios of 3.5 in each direction and at a temperature of 100°C. The film was then heat-set under dimensional restraint at a mean average temperature of 190°C. The following particles were used:

Particles P1: Amorphous silica particles of density 1.32 g/cm$^3$ were used in all Examples G1 to G10.

Particles P2: Spherical methyl silsesquioxane particles of density 1.43 g/cm$^3$ selected from one type of particle in Examples G1 to G3, a different type of particle in Examples G4 to G6, and a mixture of these particles in Examples G7 to G10.

Table 1 below reports the average sizes and concentrations of the particles in these films. The density of the PET was 1.35 g/cm$^3$.

*Table 1*

| Ex. | Particles P1 | | Particles P2 | |
|-----|--------------|--------------|--------------|--------------|
| | Size ($\mu$m) | Conc. (ppm) | Size ($\mu$m) | Conc. (ppm) |
| G1 | 0.3 | 780 | 2.05 | 540 |
| G2 | 0.3 | 1690 | 2.05 | 1170 |
| G3 | 0.3 | 2600 | 2.05 | 1800 |
| G4 | 0.3 | 1300 | 2.7 | 300 |
| G5 | 0.3 | 390 | 2.7 | 510 |
| G6 | 0.3 | 130 | 2.7 | 570 |
| G7 | 0.3 | 2340 | (i) 2.05 (ii) 2.7 | (i) 1620 (ii) 60 |
| G8 | 0.3 | 1690 | (i) 2.05 (ii) 2.7 | (i) 1170 (ii) 210 |
| G9 | 0.3 | 910 | (i) 2.05 (ii) 2.7 | (i) 630 (ii) 390 |
| G10 | 0.3 | 260 | (i) 2.05 (ii) 2.7 | (i) 180 (ii) 540 |

The properties of the films were measured by the test methods disclosed herein. The final thickness of the "thin films" was 6 $\mu$m (i.e. within the scope of the invention) and the final thickness of the "thick films" was 9 $\mu$m (i.e. outside the scope of the invention). The TLT of the films was at least 89.0%.

Haze was observed to be correlated primarily with the concentration of the larger, second inorganic particles P2. The "thin film" samples of Examples G1, G4, G5 and G6, and particularly Example G1, gave advantageously low haze values, and hence these formulations were the subject of further investigation.

The surface roughness of the films was such that $R_a$ was in the range of 40 to 110 nm. It was observed that, for the same concentration of particles, each film in the "thin" series exhibited higher surface roughness than the corresponding formulation in the "thick" series.

Examples M1 to M3

A second series of particle-containing PET compositions corresponding to formulation G1 were made using conventional techniques at different film thicknesses, i.e. wherein the polyester composition comprised:

(i) 780 ppm of amorphous silica particles P1 having an average particle size of 0.3 $\mu$m; and
(ii) 540 ppm of spherical methyl silsesquioxane particles P2 having an average particle size of 2.05 $\mu$m.

Films were prepared on a manufacturing-scale film line by extruding these compositions at a temperature of 275°C through a film-forming die on to a water-cooled rotating, quenching drum held at a temperature of 25°C to yield an amorphous cast extrudate, which was then heated to a temperature of 100°C and then stretched simultaneously in the MD and TD at stretch ratios of 3.45 in each direction. The film was then heat-set under dimensional restraint at a temperature of 190°C, and then subjected to simultaneous dimensional relaxation of 2% in each of the machine and transverse directions at a temperature of 190°C. The optically clear films were then characterised using the test methods referred to herein. Table 2 below reports the identities and some of the properties of these films (n/m = not measured), demonstrating that the films of the invention have an advantageous combination of low thickness, low haze and low surface roughness, with acceptable electrical resistance properties. Despite the very smooth surface, the film was able to be easily manufactured and processed with no negative handling or winding characteristics observed.

The inventors observed that the dimensional relaxation of the film allowed a reduction in the heat-setting temperature which advantageously resulted in a reduction in the haze of the final film without significant detriment to the shrinkage performance at 150°C.

An electrically conductive transparent ITO layer was deposited on the film surface by sputtering at a temperature of no more than 100°C to provide a transparent electrically conductive functional composite film, which enabled the manufacture of functional laminated glazing therefrom.

*Table 2*

| Ex. | Thickness (µm) | Haze (%) | TLT (%) | Shrinkage | | | Breakdown voltage (V) | Normalised breakdown voltage (V/µm) | Roughness | | | Optical Defects (per m²) | | |
|---|---|---|---|---|---|---|---|---|---|---|---|---|---|---|
| | | | | MD | TD | ratio | | | Ra (nm) | Rt (nm) | Rz (nm) | 110-220µm | 220-500µm | >500µm |
| M1 | 6.0 | 2.9 | 88.4 | n/m | n/m | n/m | n/m | n/m | n/m | n/m | n/m | 7 | 6 | 2 |
| M2 | 4.9 | 2.59 | 88.1 | 3.3 | 2.4 | 1.38 | 1809 | 371 | 89 | 1043 | 349 | 5 | 4 | 0 |
| M3 | 3.0 | 2.15 | 89.5 | 3.1 | 2.2 | 1.40 | 1350 | 445 | 30 | 908 | 205 | 2 | 0 | 0 |

**Claims**

1. A biaxially oriented polyester film comprising first inorganic particles P1 and second inorganic particles P2, wherein:

(i) said film has a total thickness of from 1.5 to 8.0 μm;
(ii) said first inorganic particles P1 have an average particle size of from 0.1 to 0.5 μm;
(iii) said first inorganic particles P1 are present in the film in a concentration of from 100 to 3000 ppm;
(iv) said second inorganic particles P2 have an average particle size of from 1.50 to 3.50 μm;
(v) said second inorganic particles P2 are present in the film in a concentration of from 100 to 2000 ppm; and
(vi) said film exhibits a haze of no more than 5.0%, measured by the method given in the description,
wherein said first inorganic particles P1 are amorphous silica particles, and wherein said second inorganic particles P2 are selected from spherical methyl silsesquioxane particles;
wherein the term "average particle size" refers to the volume distributed median particle diameter, which is the equivalent spherical diameter corresponding to 50% of the volume of all the particles, read on the cumulative distribution curve relating volume % to the diameter of the particles, as measured by laser light diffraction.

2. A polyester film according to claim 1 wherein:

(a) the total thickness is in the range of from 2.0 to 8.0 μm, preferably from 2.5 to 8.0 μm, preferably from 2.5 to 6.0 μm, preferably from 2.5 to 5.0 μm, preferably from 3.0 to 5.0 μm, preferably from 3.0 to 4.0 μm; and/or
(b) said first inorganic particles P1 are present in the film in a concentration of from 100 to 1500 ppm, preferably from 500 to 1000 ppm by weight of the film; and/or
(c) said second inorganic particles P2 are present in the film in a concentration of from 200 to 600 ppm, preferably from 400 to 600 ppm, by weight of the film; and/or
(d) said first inorganic particles P1 have an average particle size in the range of from 0.25 to 0.35 μm and/or wherein said second inorganic particles P2 have an average particle size in the range of from 1.8 to 3.1 μm, preferably 1.8 to 2.3 μm; and/or
(e) said polyester is polyethylene terephthalate; and/or
(f) said second inorganic particles P2 have an average particle size which is less than the film thickness.

3. A polyester film according to any preceding claim which exhibits:

(a) a surface roughness (Ra) of no more than 150 nm, preferably no more than 120 nm, preferably no more than 110 nm, preferably no more than 100 nm, preferably in the range of from 20 nm to 100 nm, preferably 20 nm to 50nm, measured by the method given in the description; and/or
(b) a surface roughness (Rt) of no more than 1800 nm, preferably no more than 1500 nm, preferably no more than 1250 nm, and preferably in the range of from 500 nm to 1250 nm, and/or a surface roughness (Rz) of no more than 400 nm, preferably no more than 350 nm, preferably no more than 300 nm, preferably at least 100nm and more typically at least 150 nm, more typically at least 200nm, and preferably in the range of from 100 to 400 nm, measured by the method given in the description.

4. A polyester film according to any preceding claim which exhibits:

(a) isotropic shrinkage preferably wherein the ratio of MD/TD shrinkage is in the range of 1.1 to 1.7, preferably 1.2 to 1.5, and preferably wherein the shrinkage in the machine direction of the film is no more than 4.0% (preferably in the range of from 2.0 to 4.0%) and the shrinkage in the transverse direction of the film is no more than 3.0% (preferably in the range of from 1.0 to 3.0%), wherein shrinkage is measured in air at 150°C for 30 mins, measured by the method given in the description; or
(b) balanced shrinkage preferably wherein the shrinkage in each of the MD and TD directions is no more than 4.0%, preferably no more than 3.0%, and preferably 1.0 to 4.0%, preferably 1.0 to 3.0%, wherein shrinkage is measured in air at 150°C for 30 mins, measured by the method given in the description; and/or
(c) a thickness-normalised breakdown voltage of 350-500 V/μm and/or a breakdown voltage of 1000-2000 V, preferably 1200-2000 V, measured by the method given in the description; and/or
(d) an optical defect count per m$^2$ of no more than 20, preferably no more than 15, preferably no more than 10, in respect of defects less than 500μm in size, and preferably also zero optical defects/m$^2$ in respect of defects at least 2.0mm in size, measured by the method given in the description; and/or
(e) a haze of no more than 3.0%, preferably no more than 2.5%; and/or
(f) a total light transmittance (TLT) in the wavelength range of 300-800nm of at least 85.0%, preferably at least 88.0%, preferably at least 89.0%, measured by the method given in the description.

5. A polyester film according to any preceding claim wherein:

(a) said film has a first surface and a second surface wherein there is disposed on said first surface an electrically conductive layer, preferably selected from metals, metal alloys and metal oxides (particularly doped or mixed metal oxides) and metal nitrides, such as doped or mixed zinc oxides (particularly fluorine-doped zinc oxide, or tin-, indium-, boron, gallium- or aluminium-doped zinc oxide), doped or mixed tin oxides (particularly fluorine-doped tin oxide, or indium tin oxide) and cadmium oxides (particularly cadmium stannate), and preferably wherein the electrically conductive layer is a layer of indium tin oxide, preferably wherein the thickness of said electrically conductive layer is in the range of from 1 nm to 1000 nm, preferably from 3 nm to 300 nm, preferably from 10 nm to 150 nm, preferably from 25 to 50 nm; and/or
(b) the polyester film has disposed thereon one or more optically active layers which at least partially filter or reflect selected wavelengths of radiant solar energy in one or more of the visible, UV or other wavelength regions.

6. A multilayer assembly comprising a polyester film according to any preceding claim and one or more glass layers, preferably wherein said polyester film is sandwiched between two glass layers, optionally wherein the multilayer assembly comprises said polyester film, first and second glass layers and first and second bonding resin layers, such that the layer order is: first glass layer / first bonding resin layer / polyester film / second bonding resin layer / second glass layer, further optionally wherein said bonding resin layer is selected from polyvinylbutyral (PVB) or ethylene vinyl acetate (EVA), preferably PVB.

7. A multilayer assembly according to claim 6 wherein:

(a) said polyester film has disposed thereon an electrically conductive layer and/or one or more optically active layers which at least partially filter or reflect selected wavelengths of radiant solar energy in one or more of the visible, UV or other wavelength regions; and/or
(b) the multilayer assembly is curved, optionally wherein said polyester film exhibits isotropic shrinkage, preferably wherein the ratio of MD/TD shrinkage is in the range of 1.1 to 1.7, preferably 1.2 to 1.5, and preferably wherein the shrinkage in the machine direction of the film is no more than 4.0% (preferably in the range of from 2.0 to 4.0%) and the shrinkage in the transverse direction of the film is no more than 3.0% (preferably in the range of from 1.0 to 3.0%), wherein shrinkage is measured in air at 150°C for 30 mins, measured by the method given in the description.

8. A multilayer assembly according to any of claims 6 or 7 which is a glazing panel.

9. An electrically heatable laminated glazing panel comprising the multilayer assembly of claim 7 wherein said polyester film has disposed thereon said electrically conductive layer and optionally said one or more optically active layers.

10. Use of a multilayer assembly as defined in claim 7 as electrically heatable laminated glazing in automotive applications wherein said polyester film has disposed thereon said electrically conductive layer and optionally said one or more optically active layers.

11. A multilayer assembly according to claim 6 or 7 which comprises said polyester film and an electrically conductive layer constituted by a pattern of electrically conductive material or an electrically conductive mesh suitable for functionally interacting with radio-frequency wavelengths of mobile communication technology, preferably those selected from one or more of the ranges of 600-900MHz, 1.7-4.7GHz and 24-54 GHz.

12. A laminated glazing panel comprising the multilayer assembly of claim 6 or 7 wherein said polyester film has disposed thereon said electrically conductive layer and optionally said one or more optically active layers, wherein said electrically conductive layer is constituted by a pattern of electrically conductive material or an electrically conductive mesh suitable for functionally interacting with radio-frequency wavelengths of mobile communication technology, preferably those selected from one or more of the ranges of 600-900MHz, 1.7-4.7GHz and 24-54 GHz.

13. Use of a multilayer assembly as defined in claim 6 or 7 as a laminated glazing panel in building construction wherein said polyester film has disposed thereon said electrically conductive layer and optionally said one or more optically active layers, wherein said electrically conductive layer is constituted by a pattern of electrically conductive material or an electrically conductive mesh suitable for functionally interacting with radio-frequency wavelengths of mobile communication technology, preferably those selected from one or more of the ranges of 600-900MHz, 1.7-4.7GHz and 24-54 GHz.

14. A method of making a biaxially oriented polyester film as defined in any of claims 1 to 5, comprising the steps of:

(i) extruding a layer of molten polyester;
(ii) biaxially stretching said layer of molten polyester in two mutually perpendicular directions, preferably by simultaneous biaxial stretching;
(iii) heat-setting the film under tension at heat-set at a temperature of no more 225°C;
(iv) dimensionally relaxing the film by 1.0 to 3.0% in the machine dimension of the film at a temperature in the range of 180 to 200°C and/or dimensionally relaxing the film by 1.0 to 3.0% in the transverse dimension of the film at a temperature in the range of 180 to 200°C; and
(v) optionally disposing an electrically conductive layer on a first surface of the film, preferably by sputtering.

15. A method according to claim 14 wherein:

(a) the biaxial stretching ratios in each direction are no more than 4.0, preferably no more than 3.7, and preferably in the range of 2.5 to 4.0, preferably in the range of 3.0 to 4.0, and preferably in the range of 3.3 to 3.7; and/or
(b) the film is stretched symmetrically, and optionally wherein dimensional relaxation is asymmetric; and/or
(c) said heat-setting is conducted at a temperature of no more than 200°C, preferably from 180 to 200°C; and/or
(d) the electrically conductive layer is disposed on a first surface of the film at a temperature below 150°C, preferably below 120°C, preferably no more than 100°C.

## Patentansprüche

1. Biaxial orientierte Polyesterfolie umfassend erste anorganische Partikel P1 und zweite anorganische Partikel P2, wobei:

(i) die Folie eine Gesamtdicke von 1,5 bis 8,0 $\mu$m aufweist;
(ii) die ersten anorganischen Partikel P1 eine mittlere Partikelgröße von 0,1 bis 0,5 $\mu$m aufweisen;
(iii) die ersten anorganischen Partikel P1 in der Folie in einer Konzentration von 100 bis 3000 ppm vorhanden sind;
(iv) die zweiten anorganischen Partikel P2 eine mittlere Partikelgröße von 1,50 bis 3,50 $\mu$m aufweisen;
(v) die zweiten anorganischen Partikel P2 in der Folie in einer Konzentration von 100 bis 2000 ppm vorhanden sind; und
(vi) der Film eine Trübung von nicht mehr als 5,0 %, gemessen nach dem in der Beschreibung angegebenen Verfahren, aufweist,
wobei die ersten anorganischen Partikel P1 amorphe Siliciumdioxidpartikel sind und wobei die zweiten anorganischen Partikel P2 aus sphärischen Methylsilsesquioxanpartikeln ausgewählt sind;
wobei sich der Begriff "mittlere Partikelgröße" auf den volumenverteilten medianen Partikeldurchmesser bezieht, der der äquivalente sphärische Durchmesser ist, der 50 % des Volumens aller Partikel entspricht, bestimmt an der kumulativen Verteilungskurve, wie gemessen durch Laserlichtbeugung, die Volumen-% mit dem Durchmesser der Partikel in Beziehung setzt.

2. Polyesterfolie nach Anspruch 1, wobei:

(a) die Gesamtdicke in dem Bereich von 2,0 bis 8,0 $\mu$m, vorzugsweise von 2,5 bis 8,0 $\mu$m, vorzugsweise von 2,5 bis 6,0 $\mu$m, vorzugsweise von 2,5 bis 5,0 $\mu$m, vorzugsweise von 3,0 bis 5,0 $\mu$m, vorzugsweise von 3,0 bis 4,0 $\mu$m, liegt; und/oder
(b) die ersten anorganischen Partikel P1 in der Folie in einer Konzentration von 100 bis 1500 ppm, vorzugsweise von 500 bis 1000 ppm, bezogen auf das Gewicht der Folie, vorhanden sind; und/oder
(c) die zweiten anorganischen Partikel P2 in der Folie in einer Konzentration von 200 bis 600 ppm, vorzugsweise von 400 bis 600 ppm, bezogen auf das Gewicht der Folie, vorhanden sind; und/oder
(d) die ersten anorganischen Partikel P1 eine mittlere Partikelgröße in dem Bereich von 0,25 bis 0,35 $\mu$m aufweisen und/oder wobei die zweiten anorganischen Partikel P2 eine mittlere Partikelgröße in dem Bereich von 1,8 bis 3,1 $\mu$m, vorzugsweise 1,8 bis 2,3 $\mu$m, aufweisen; und/oder
(e) der Polyester Polyethylenterephthalat ist; und/oder

(f) die zweiten anorganischen Partikel P2 eine mittlere Partikelgröße, die kleiner ist als die Filmdicke, aufweisen.

3. Polyesterfolie nach einem der vorstehenden Ansprüche, die aufweist:

(a) eine Oberflächenrauigkeit (Ra) von nicht mehr als 150 nm, vorzugsweise nicht mehr als 120 nm, vorzugsweise nicht mehr als 110 nm, vorzugsweise nicht mehr als 100 nm, vorzugsweise in dem Bereich von 20 nm bis 100 nm, vorzugsweise 20 nm bis 50 nm, gemessen nach dem in der Beschreibung angegebenen Verfahren; und/oder

(b) eine Oberflächenrauigkeit (Rt) von nicht mehr als 1800 nm, vorzugsweise nicht mehr als 1500 nm, vorzugsweise nicht mehr als 1250 nm und vorzugsweise in dem Bereich von 500 nm bis 1250 nm, und/oder eine Oberflächenrauigkeit (Rz) von nicht mehr als 400 nm, vorzugsweise nicht mehr als 350 nm, vorzugsweise nicht mehr als 300 nm, vorzugsweise wenigstens 100 nm und typischer wenigstens 150 nm, typischer wenigstens 200 nm, und vorzugsweise in dem Bereich von 100 bis 400 nm, gemessen nach dem in der Beschreibung angegebenen Verfahren.

4. Polyesterfolie nach einem der vorstehenden Ansprüche, die aufweist:

(a) isotrope Schrumpfung, vorzugsweise wobei das Verhältnis der MD/TD-Schrumpfung in dem Bereich von 1,1 bis 1,7, vorzugsweise 1,2 bis 1,5, liegt und vorzugsweise wobei die Schrumpfung in der Maschinenrichtung der Folie nicht mehr als 4,0 % beträgt (vorzugsweise in dem Bereich von 2,0 bis 4,0 %) und die Schrumpfung in der Querrichtung der Folie nicht mehr als 3,0 % beträgt (vorzugsweise in dem Bereich von 1,0 bis 3,0 %), wobei die Schrumpfung in Luft bei 150 °C für 30 min gemessen wird, gemessen nach dem in der Beschreibung angegebenen Verfahren; oder

(b) ausgewogene Schrumpfung, vorzugsweise wobei die Schrumpfung in jeder der MD- und TD-Richtungen nicht mehr als 4,0 %, vorzugsweise nicht mehr als 3,0 % und vorzugsweise 1,0 bis 4,0 %, vorzugsweise 1,0 bis 3,0 %, beträgt, wobei die Schrumpfung in Luft bei 150° C für 30 min gemessen wird, gemessen nach dem in der Beschreibung angegebenen Verfahren; und/oder

(c) eine dickennormierte Durchschlagspannung von 350-500 V/um und/oder eine Durchschlagspannung von 1000-2000 V, vorzugsweise 1200-2000 V, gemessen nach dem in der Beschreibung angegebenen Verfahren; und/oder

(d) eine Anzahl von optischen Defekten pro m$^2$ von nicht mehr als 20, vorzugsweise nicht mehr als 15, vorzugsweise nicht mehr als 10, bezogen auf Defekte mit einer Größe unter 500 $\mu$m, und vorzugsweise null optischen Defekten/m$^2$, bezogen auf Defekte mit einer Größe von wenigstens 2,0 mm, gemessen nach dem in der Beschreibung angegebenen Verfahren; und/oder

(e) eine Trübung von nicht mehr als 3,0 %, vorzugsweise nicht mehr als 2,5 %; und/oder

(f) eine Gesamt-Lichtdurchlässigkeit (TLT) in dem Wellenlängenbereich von 300-800 nm von wenigstens 85,0 %, vorzugsweise wenigstens 88,0 %, vorzugsweise wenigstens 89,0 %, gemessen nach dem in der Beschreibung angegebenen Verfahren.

5. Polyesterfolie nach einem der vorstehenden Ansprüche, wobei:

(a) die Folie eine erste Oberfläche und eine zweite Oberfläche aufweist, wobei auf der ersten Oberfläche eine elektrisch leitfähige Schicht angeordnet ist, vorzugsweise ausgewählt aus Metallen, Metalllegierungen und Metalloxiden (insbesondere dotierten oder gemischten Metalloxiden) und Metallnitriden, wie z.B. dotierten oder gemischten Zinkoxiden (insbesondere Fluor-dotiertes Zinkoxid oder Zinn-, Indium-, Bor-, Gallium- oder Aluminium-dotiertes Zinkoxid), dotierten oder gemischten Zinnoxiden (insbesondere Fluor-dotiertes Zinnoxid oder Indiumzinnoxid) und Cadmiumoxiden (insbesondere Cadmiumstannat), und vorzugsweise wobei die elektrisch leitfähige Schicht eine Schicht aus Indiumzinnoxid ist, wobei die Dicke der elektrisch leitfähigen Schicht vorzugsweise in dem Bereich von 1 nm bis 1000 nm, vorzugsweise von 3 nm bis 300 nm, vorzugsweise von 10 nm bis 150 nm, vorzugsweise von 25 bis 50 nm, liegt; und/oder

(b) die Polyesterfolie eine oder mehrere optisch aktive Schichten aufweist, die ausgewählte Wellenlängen strahlender Sonnenenergie in einem oder mehreren sichtbaren, UV- oder anderen Wellenlängenbereichen wenigstens teilweise filtern oder reflektieren.

6. Mehrschichtige Anordnung umfassend eine Polyesterfolie nach einem der vorstehenden Ansprüche und eine oder mehrere Glasschichten, vorzugsweise wobei die Polyesterfolie zwischen zwei Glasschichten eingelegt ist, gegebenenfalls wobei die mehrschichtige Anordnung die Polyesterfolie, die erste und zweite Glasschicht sowie erste und zweite Bindeharzschichten umfasst, wobei die Schichtordnung ist: erste Glasschicht / erste Bindeharzschicht / Polyesterfolie / zweite Bindeharzschicht / zweite Glasschicht, ferner gegebenenfalls wobei die Bindeharzschicht ausgewählt ist aus Polyvinylbutyral (PVB) und Ethylenvinylacetat (EVA), vorzugsweise PVB.

7. Mehrschichtige Anordnung nach Anspruch 6, wobei:

    (a) die Polyesterfolie eine elektrisch leitfähige Schicht und/oder eine oder mehrere optisch aktive Schichten, die ausgewählte Wellenlängen strahlender Sonnenenergie in einem oder mehreren der sichtbaren, UV- oder anderen Wellenlängenbereiche wenigstens teilweise filtern oder reflektieren, darauf angeordnet aufweist und/oder

    (b) die mehrschichtige Anordnung gekrümmt ist, wobei die Polyesterfolie gegebenenfalls isotrope Schrumpfung aufweist, vorzugsweise wobei das Verhältnis der MD/TD-Schrumpfung in dem Bereich von 1,1 bis 1,7, vorzugsweise 1,2 bis 1,5, liegt und vorzugsweise wobei die Schrumpfung in der Maschinenrichtung der Folie nicht mehr als 4,0 % beträgt (vorzugsweise in dem Bereich von 2,0 bis 4,0 %) und die Schrumpfung in der Querrichtung der Folie nicht mehr als 3,0 % beträgt (vorzugsweise in dem Bereich von 1,0 bis 3,0 %), wobei die Schrumpfung in Luft bei 150 °C für 30 min gemessen wird, gemessen nach dem in der Beschreibung angegebenen Verfahren.

8. Mehrschichtige Anordnung nach einem der Ansprüche 6 oder 7, die eine Verglasungsscheibe ist.

9. Elektrisch heizbare laminierte Verglasungsscheibe, umfassend die mehrschichtige Anordnung nach Anspruch 7, wobei die Polyesterfolie darauf angeordnet die elektrisch leitfähige Schicht und gegebenenfalls die eine oder mehreren optisch aktiven Schichten aufweist.

10. Verwendung einer mehrschichtigen Anordnung nach Anspruch 7 als elektrisch beheizbare laminierte Verglasung in Automobilanwendungen, wobei die Polyesterfolie darauf angeordnet die elektrisch leitfähige Schicht und gegebenenfalls die eine oder mehreren optisch aktiven Schichten aufweist.

11. Mehrschichtige Anordnung nach Anspruch 6 oder 7 umfassend die Polyesterfolie und eine elektrisch leitfähige Schicht, die durch eine Struktur aus elektrisch leitfähigem Material oder ein elektrisch leitfähiges Netz gebildet ist, die geeignet ist, funktional mit Hochfrequenzwellenlängen der Mobilkommunikationstechnologie, vorzugsweise jenen ausgewählt aus aus einem oder mehreren der Bereiche von 600-900MHz, 1,7-4,7GHz und 24-54 Ghz, zu wechselwirken.

12. Laminierte Verglasungsscheibe umfassend die mehrschichtige Anordnung nach Anspruch 6 oder 7, wobei die Polyesterfolie darauf angeordnet die elektrisch leitfähige Schicht und gegebenenfalls die eine oder mehrere optisch aktiven Schichten aufweist, wobei die elektrisch leitfähige Schicht durch eine Struktur aus elektrisch leitfähigem Material oder ein elektrisch leitfähiges Netz gebildet ist, die geeignet ist, funktional mit Hochfrequenzwellenlängen der Mobilkommunikationstechnologie, vorzugsweise jenen ausgewählt aus einem oder mehreren der Bereiche von 600-900MHz, 1,7-4,7GHz und 24-54 Ghz, zu wechselwirken.

13. Verwendung einer mehrschichtigen Anordnung nach Anspruch 6 oder 7 als laminierte Verglasungsscheibe im Gebäudebau, wobei die Polyesterfolie darauf angeordnet die elektrisch leitfähige Schicht und gegebenenfalls die eine oder mehrere optisch aktiven Schichten aufweist, wobei die elektrisch leitfähige Schicht durch eine Struktur aus elektrisch leitfähigem Material oder ein elektrisch leitfähiges Netz gebildet ist, die geeignet ist, funktional mit Hochfrequenzwellenlängen der Mobilkommunikationstechnologie, vorzugsweise jenen ausgewählt aus einem oder mehreren der Bereiche von 600-900MHz, 1,7-4,7GHz und 24-54 Ghz, zu wechselwirken.

14. Verfahren zur Herstellung einer biaxial orientierten Polyesterfolie nach einem der Ansprüche 1 bis 5, umfassend die Schritte:

    (i) Extrudieren einer Schicht von geschmolzenem Polyester;
    (ii) biaxiales Strecken der Schicht von geschmolzenem Polyester in zwei aufeinander senkrechten Richtungen, vorzugsweise durch gleichzeitiges biaxiales Strecken;
    (iii) Wärmehärten der Folie unter Spannung bei dem Wärmehärten bei einer Temperatur von nicht mehr als 225 °C;
    (iv) gerichtetes Entspannen der Folie um 1,0 bis 3,0 % in der Maschinenrichtung der Folie bei einer Temperatur in dem Bereich von 180 bis 200 °C und/oder gerichtetes Entspannen der Folie um 1,0 bis 3,0 % in der Querrichtung der Folie bei einer Temperatur in dem Bereich von 180 bis 200 °C; und
    (v) gegebenenfalls Aufbringen einer elektrisch leitfähigen Schicht auf eine erste Oberfläche der Folie, vorzugsweise durch Sputtern.

**15.** Verfahren nach Anspruch 14, wobei:

(a) die biaxialen Streckverhältnisse in jeder Richtung nicht mehr als 4,0, vorzugsweise nicht mehr als 3,7, betragen und vorzugsweise in dem Bereich von 2,5 bis 4,0, vorzugsweise in dem Bereich von 3,0 bis 4,0 und vorzugsweise in dem Bereich von 3,3 bis 3,7, liegen und/oder
(b) die Folie symmetrisch gestreckt wird, wobei gegebenenfalls die gerichtete Entspannung asymmetrisch ist; und/oder
(c) die Wärmehärtung bei einer Temperatur von nicht mehr als 200 °C, vorzugsweise von 180 bis 200 °C, durchgeführt wird; und/oder
(d) die elektrisch leitfähige Schicht auf einer ersten Oberfläche der Folie bei einer Temperatur unter 150 °C, vorzugsweise unter 120 °C, vorzugsweise nicht mehr als 100 °C, aufgebracht wird.

**Revendications**

**1.** Film de polyester à orientation biaxiale comprenant de premières particules inorganiques P1 et de deuxièmes particules inorganiques P2, dans lequel :

(i) ledit film a une épaisseur totale allant de 1,5 à 8,0 $\mu$m ;
(ii) lesdites premières particules inorganiques P1 ont une taille moyenne de particules allant de 0,1 à 0,5 $\mu$m ;
(iii) lesdites premières particules inorganiques P1 sont présentes dans le film à une concentration allant de 100 à 3000 ppm ;
(iv) lesdites deuxièmes particules inorganiques P2 ont une taille moyenne de particules allant de 1,50 à 3,50 $\mu$m ;
(v) lesdites deuxièmes particules inorganiques P2 sont présentes dans le film à une concentration allant de 100 à 2000 ppm ; et
(vi) ledit film présente un voile ne dépassant pas 5,0 %, mesuré par la méthode indiquée dans la description, lesdites premières particules inorganiques P1 étant des particules de silice amorphe, et lesdites deuxièmes particules inorganiques P2 étant choisies parmi les particules sphériques de méthylsilsesquioxane ;
le terme « taille moyenne des particules » faisant référence au diamètre médian des particules distribué en volume, qui est le diamètre sphérique équivalent correspondant à 50 % du volume de toutes les particules, lu sur la courbe de distribution cumulée liant le pourcentage volumique au diamètre des particules, comme mesuré par diffraction laser.

**2.** Film de polyester selon la revendication 1 dans lequel :

(a) l'épaisseur totale est comprise entre 2,0 et 8,0 $\mu$m, de préférence entre 2,5 et 8,0 $\mu$m, de préférence entre 2,5 et 6,0 $\mu$m, de préférence entre 2,5 et 5,0 $\mu$m, de préférence entre 3,0 et 5,0 $\mu$m, de préférence entre 3,0 et 4,0 $\mu$m ; et/ou
(b) lesdites premières particules inorganiques P1 sont présentes dans le film à une concentration allant de 100 à 1500 ppm, de préférence de 500 à 1000 ppm en poids du film ; et/ou
(c) lesdites deuxièmes particules inorganiques P2 sont présentes dans le film à une concentration allant de 200 à 600 ppm, de préférence de 400 à 600 ppm en poids du film ; et/ou
(d) lesdites premières particules inorganiques P1 ont une taille moyenne de particules comprise entre 0,25 et 0,35 $\mu$m et/ou lesdites deuxièmes particules inorganiques P2 ont une taille moyenne de particules comprise entre 1,8 et 3,1 $\mu$m, de préférence entre 1,8 et 2,3 $\mu$m ; et/ou
(e) ledit polyester est le téréphtalate de polyéthylène ; et/ou
(f) lesdites deuxièmes particules inorganiques P2 ont une taille moyenne de particules qui est inférieure à l'épaisseur du film.

**3.** Film de polyester selon une quelconque revendication précédente qui présente :

(a) une rugosité de surface (Ra) ne dépassant pas 150 nm, de préférence ne dépassant pas 120 nm, de préférence ne dépassant pas à 110 nm, de préférence ne dépassant pas 100 nm, de préférence comprise entre 20 nm et 100 nm, de préférence entre 20 nm et 50 nm, mesurée par la méthode indiquée dans la description ; et/ou
(b) une rugosité de surface (Rt) ne dépassant pas 1800 nm, de préférence ne dépassant pas 1500 nm, de préférence ne dépassant pas 1250 nm, et de préférence comprise entre 500 nm et 1250 nm, et/ou une rugosité de surface (Rz) ne dépassant pas 400 nm, de préférence ne dépassant pas 350 nm, de préférence ne dépassant pas 300 nm, de préférence d'au moins 100 nm et plus généralement d'au moins 150 nm, plus généralement d'au moins 200 nm, et de préférence comprise entre 100 et 400 nm, mesurées par la méthode indiquée dans la description.

4. Film de polyester selon une quelconque revendication précédente qui présente :

(a) un retrait isotrope, de préférence dans lequel le rapport de retrait MD/TD est compris entre 1,1 et 1,7, de préférence entre 1,2 et 1,5, et de préférence dans lequel le retrait dans le sens machine du film ne dépasse pas 4,0 % (de préférence compris entre 2,0 et 4,0 %) et le retrait dans le sens travers du film ne dépasse pas 3,0 % (de préférence compris entre 1,0 et 3,0 %), le retrait étant mesuré dans l'air à 150 °C pendant 30 min, mesuré par la méthode indiquée dans la description ; ou
(b) un retrait équilibré, de préférence dans lequel le retrait dans chacun des sens MD et TD ne dépasse pas 4,0 %, de préférence ne dépasse pas 3,0 %, et de préférence est compris entre 1,0 et 4,0 %, de préférence entre 1,0 et 3,0 %, le retrait étant mesuré dans l'air à 150 °C pendant 30 min, mesuré par la méthode indiquée dans la description ; et/ou
(c) une tension de claquage normalisée sur l'épaisseur de 350-500 v/$\mu$m et/ou une tension de claquage de 1000-2000 V, de préférence de 1200-2000 V, mesurée par la méthode indiquée dans la description ; et/ou
(d) un nombre de défauts optiques par m$^2$ ne dépassant pas 20, de préférence ne dépassant pas 15, de préférence ne dépassant pas 10, pour des défauts de taille inférieure à 500 $\mu$m, et de préférence aussi zéro défaut optique par m$^2$ pour des défauts de taille au moins égale à 2,0 mm, mesuré par la méthode indiquée dans la description ; et/ou
(e) un voile ne dépassant pas 3,0 %, de préférence ne dépassant pas 2,5 % ; et/ou
(f) une transmittance lumineuse totale (TLT) dans la plage de longueurs d'onde de 300 à 800 nm d'au moins 85,0 %, de préférence d'au moins 88,0 %, de préférence d'au moins 89,0 %, mesurée par la méthode indiquée dans la description.

5. Film de polyester selon une quelconque revendication précédente dans lequel :

(a) ledit film comporte une première surface et une deuxième surface, ladite première surface étant recouverte d'une couche électroconductrice, de préférence choisie parmi les métaux, les alliages métalliques, les oxydes métalliques (en particulier les oxydes métalliques dopés ou mixtes) et les nitrures métalliques, tels que les oxydes de zinc dopés ou mixtes (en particulier l'oxyde de zinc dopé au fluor, ou l'oxyde de zinc dopé à l'étain, à l'indium, au bore, au gallium ou à l'aluminium), les oxydes d'étain dopés ou mixtes (en particulier l'oxyde d'étain dopé au fluor, ou l'oxyde d'indium et d'étain) et les oxydes de cadmium (en particulier le stannate de cadmium), et la couche électroconductrice étant de préférence une couche d'oxyde d'indium et d'étain, l'épaisseur de ladite couche électroconductrice étant de préférence comprise entre 1 nm et 1000 nm, de préférence entre 3 nm et 300 nm, de préférence entre 10 nm et 150 nm, de préférence entre 25 et 50 nm ; et/ou
(b) le film de polyester est recouvert d'une ou plusieurs couches optiquement actives qui filtrent ou réfléchissent au moins partiellement des longueurs d'onde sélectionnées d'énergie solaire rayonnante dans une ou plusieurs des régions de longueurs d'onde visible, UV ou autres.

6. Ensemble multicouche comprenant un film de polyester selon une quelconque revendication précédente et une ou plusieurs couches de verre, ledit film de polyester étant de préférence intercalé entre deux couches de verre, l'ensemble multicouche comprenant éventuellement ledit film de polyester, de première et deuxième couches de verre et de première et deuxième couches de résine liante, de sorte que l'ordre des couches est : première couche de verre / première couche de résine liante / film de polyester / deuxième couche de résine liante / deuxième couche de verre, ladite couche de résine liante étant en outre éventuellement choisie parmi le polyvinylbutyral (PVB) et l'éthylène-acétate de vinyle (EVA), de préférence le PVB.

7. Ensemble multicouche selon la revendication 6 dans lequel :

(a) ledit film de polyester est recouvert d'une couche électroconductrice et/ou d'une ou plusieurs couches optiquement actives qui filtrent ou réfléchissent au moins partiellement des longueurs d'onde sélectionnées d'énergie solaire rayonnante dans une ou plusieurs des régions de longueurs d'onde visible, UV ou autres ; et/ou
(b) l'ensemble multicouche est incurvé, ledit film de polyester présentant éventuellement un retrait isotrope, de préférence dans lequel le rapport de retrait MD/TD est compris entre 1,1 et 1,7, de préférence entre 1,2 et 1,5, et de préférence dans lequel le retrait dans le sens machine du film ne dépasse pas 4,0 % (de préférence compris entre 2,0 et 4,0 %) et le retrait dans le sens travers du film ne dépasse pas 3,0 % (de préférence compris entre 1,0 et 3,0 %), le retrait étant mesuré dans l'air à 150 °C pendant 30 min, mesuré par la méthode indiquée dans la description.

8. Ensemble multicouche selon l'une quelconque des revendications 6 et 7, qui est un panneau de vitrage.

9. Panneau de vitrage feuilleté chauffable électriquement comprenant l'ensemble multicouche de la revendication 7, ledit film de polyester étant recouvert de ladite couche électroconductrice et éventuellement de ladite ou desdites couches optiquement actives.

10. Utilisation d'un ensemble multicouche tel que défini dans la revendication 7 comme vitrage feuilleté chauffable électriquement dans des applications automobiles, ledit film de polyester étant recouvert de ladite couche électroconductrice et éventuellement de ladite ou desdites couches optiquement actives.

11. Ensemble multicouche selon la revendication 6 ou 7 qui comprend ledit film de polyester et une couche électroconductrice constituée par un motif de matériau électroconducteur ou un treillis électriquement conducteur approprié pour interagir fonctionnellement avec les longueurs d'onde radiofréquence de la technologie de communication mobile, de préférence celles choisies dans une ou plusieurs des plages de 600-900 MHz, 1,7-4,7 GHz et 24-54 GHz.

12. Panneau de vitrage feuilleté comprenant l'ensemble multicouche de la revendication 6 ou 7, ledit film de polyester étant recouvert de ladite couche électroconductrice et éventuellement de ladite ou desdites couches optiquement actives, ladite couche électriquement conductrice étant constituée par un motif de matériau électriquement conducteur ou un treillis électriquement conducteur approprié pour interagir fonctionnellement avec les longueurs d'onde radiofréquence de la technologie de communication mobile, de préférence celles choisies dans une ou plusieurs des plages de 600-900 MHz, 1,7-4,7 GHz et 24-54 GHz.

13. Utilisation d'un ensemble multicouche tel que défini dans la revendication 6 ou 7 comme panneau de vitrage feuilleté dans la construction de bâtiments, ledit film de polyester étant recouvert de ladite couche électroconductrice et éventuellement de ladite ou desdites couches optiquement actives, ladite couche électriquement conductrice étant constituée par un motif de matériau électriquement conducteur ou un treillis électriquement conducteur approprié pour interagir fonctionnellement avec les longueurs d'onde radiofréquence de la technologie de communication mobile, de préférence celles choisies dans une ou plusieurs des plages de 600-900 MHz, 1,7-4,7 GHz et 24-54 GHz.

14. Procédé de fabrication d'un film de polyester à orientation biaxiale tel que défini dans l'une quelconque des revendications 1 à 5, comprenant les étapes suivantes :

(i) extrusion d'une couche de polyester fondu ;
(ii) étirage biaxial de ladite couche de polyester fondu dans deux directions mutuellement perpendiculaires, de préférence par étirage biaxial simultané ;
(iii) thermodurcissement du film sous tension pendant le thermodurcissement à une température ne dépassant pas 225 °C ;
(iv) relaxation dimensionnelle du film de 1,0 à 3,0 % dans le sens machine du film à une température comprise entre 180 et 200 °C et/ou relaxation dimensionnelle du film de 1,0 à 3,0 % dans le sens travers du film à une température comprise entre 180 et 200 °C ; et
(v) éventuellement, application d'une couche électroconductrice sur une première surface du film, de préférence par pulvérisation cathodique.

15. Procédé selon la revendication 14 dans lequel :

(a) les rapports d'étirage biaxial dans chaque sens ne dépassent pas 4,0, de préférence ne dépassent pas 3,7, et de préférence sont compris entre 2,5 et 4,0, de préférence entre 3,0 et 4,0, et de préférence entre 3,3 et 3,7 ; et/ou
(b) le film est étiré symétriquement, et éventuellement dans lequel la relaxation dimensionnelle est asymétrique ; et/ou
(c) ledit thermodurcissement est effectué à une température ne dépassant pas 200 °C, de préférence de 180 à 200 °C ; et/ou
(d) la couche électroconductrice est appliquée sur une première surface du film à une température inférieure à 150 °C, de préférence inférieure à 120 °C, de préférence ne dépassant pas 100 °C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0648802 A1
- EP 0261430 A2
- US 5132356 A
- WO 9933910 A1
- CN 110093017 A
- EP 0532172 A1
- EP 2108673 A
- US 20090117362 A1
- US 20070029026 A